# EUROPEAN PATENT APPLICATION

(11) **EP 2 423 500 A1**
(43) Date of publication of application: **29.02.2012**
(21) Application number: 10767365.9
(22) Date of filing: 02.03.2010
(51) Int. Cl.: F03D 3/04, F03D 3/06, F03D 9/00, H02K 7/18

(54) **WIND ENERGY INSTALLATION**

(30) Priority: 24.04.2009 RU 2009115533; 06.05.2009 RU 2009117229
(71) Applicant: Vigaev, Valeriy Petrovich, Moscow 123242 (RU); Mikhov, Alexander Petrovich, Leninsky raion 142720 (RU)
(72) Inventor: VIGAEV, Valeriy Petrovich, Moscow 123242 (RU)
(74) Representative: De Ros, Alberto
(86) International application number: PCT/RU2010/000096
(87) International publication number: WO 2010/123400

(57) **Abstract**

The invention relates to the field of wind energy. The wind energy installation comprises at least one energy module (1) with a vertical axis of rotation, which energy module is designed to enable the vertical installation of at least one additional module. The energy module (1) comprises rotor blades (6) which are fixed to a bearing cylinder (5) and are flat, said rotor being arranged inside a stator, which is formed by a system of vertically positioned wind guide plates (7). The wind guide plates (7) are designed to be capable of changing in area on account of a telescopic movement of a movable sector (8) thereof, which movable sector can be arranged both inside and outside said wind guide plates. The rotor blades (6) are equipped with vortex generators (9), which are in the form of curved strips. The arrangement of the rotor blades (6) relative to the bearing cylinder (5) is designed so as to form a slotted diffuser (10) between said rotor blades and the bearing cylinder (5). In the event that the wind energy installation is intended to be used for generating electrical energy, a permanent magnet generator (12) with distributed stator windings is mounted on each of the ends of the rotor. The wind energy installation has increased effectiveness in use in comparison with similar known installations, inter alia as a result of an increase in the efficiency and the possibility of operation at low wind speeds

## Description

The invention relates to the field of wind energy and can be used in installations working with wind energy to produce predominantly electricity.

Prior arts refer to wind energy installations containing a wind turbine rotor with predominantly curvilinear blades and a wind guide apparatus that wholly or partly surrounds the wind turbine rotor and consists of predominantly curved guide plates (blades), thus providing a smooth wind flow onto the curvilinear blades of the wind turbine rotor (SU 1721285A1, 1992; RU 2215898 C1, 2003; US 6309172 B1 2001; DE 19739921, 1999; GB 2049066 A, 1980; FR 28117820 A1, 2002; EP 1096144 A2, 2001; WO 91/19093, 1991). Shortcomings of these prior installations are low efficiency and the impossibility of working at low wind speeds.

Of the prior installations, the most similar to the declared installation is a wind energy installation consisting of at least one rotor wind generator with a vertical axis of rotation, produced as a module with possible vertical assembly of modules, including wind turbine rotor blades fastened with clearance in relation to the module shaft, the module being positioned within a fixed wind-defection screen system (stator) coaxially with the wind turbine rotor, designed as vertical guide plates (RU 2249722 C1, 2005). In this wind energy installation, the wind turbine rotor blades take the form of aerodynamic (curved) wings. The vertical guide plates also take the form of aerodynamic wings, so that their concave surfaces are facing the opposite direction of rotation in relation to the concave surfaces of the wind turbine rotor blades. In the clearance produced by the rotor blades, the module shaft contains a screw with spiral blades. The lower part of the rotor wind generator, on the shaft connected with the bearing cylinder (wind generator module shaft), carries an electrical generator unit, installation of this unit being provided for on one (the lower) module only.

This wind energy installation does not have sufficient operational effectiveness, the efficiency levels reached being too low and the work of the installation at low air flow speeds being ineffective, and also because of the impossibility of fully realising the benefits of modular construction of the installation when using it to produce electrical energy.

The construction of this wind energy installation prevents high efficiency levels from being reached, especially with minimal air flow, this being connected with the inefficient work of the fixed wind guide screen system and wind turbine rotor blades. The presence of the spiral-blade screw on the module shaft allows additional air flow spin for discharge into the atmosphere, but also holds back the efficiency of the installation at low air flow speeds. In addition, in an installation consisting of several modules (rotor wind generators) and intended for electrical energy production, the presence of one electrical generation unit on just one (the lower) shaft limits its potential and also prevents high efficiency levels from being reached.

The aim of the invention is to create a wind energy installation without the shortcomings of the prototype. The technical result reached by using the invention is increased operational efficiency of the wind energy installation, including increased efficiency and work potential at low wind speeds.

This aim is accomplished, and the technical result is reached, through the wind energy installation, containing a main energy module that contains a rotor with a vertical axis of rotation and consisting of a load-bearing cylinder with blades fastened to it and providing clearance, positioned coaxially within the stator, formed by a system of vertically arranged wind guide plates and constructed with the possibility of the vertical installation containing at least one additional energy module above the principal one, being equipped with a rotor rotation speed regulator, the stator being equipped with fastening collars for the wind guide plates each equipped with a movable section installed to allow telescopic adjustment to its area and connected to the rotor rotation speed regulator, the rotor blades being flat and equipped with vortex generators in the form of curved strips, and the clearance between the rotor blades and bearing cylinder taking the form of a slotted diffuser.

Also, because the movable section of the vertical guide plates can be moved within them or on the outside in close proximity to them.

Also, because the wind guide plates can be made to form arcs in the cross-section, with the rotor blades being positioned radially to the rotor rotation axis, or each wind guide plate can be flat with the possibility of rotation around a vertical axis passing through the outer edge of the stator parallel to the rotor rotation axis, and equipped with two limiters positioned on the outer edge of the stator, with the rotor blades being positioned at a tangent to the bearing cylinder.

Also, because the main energy module in the lower part is equipped with the main electrical energy unit connected to the bearing cylinder.

Preferably, the installation should be equipped with at least one additional electrical energy unit, connected to the bearing cylinder, with one of the additional electrical energy units being installed in the upper part of the main energy module and the others in the lower and upper parts of each additional energy module, and a magnetoelectric generator with distributed stator windings used as the electrical energy unit, with the magnetoelectric generator specifically taking the form of a series of electromagnetic coils fastened together with a magnetic circuit with open contours on the fastening collar of the wind guide plates, and continuous magnet-inductors fastened to the rotor ends.

The wind energy installation modules in assembly may be provided with a common axis of rotation or with separate axes of rotation.

The technical result is also achieved by equipping the installation with a wind speed control unit, for which a tachogenerator connected to a rotor rotation speed regulator, a protective braking unit installed on the rotor rotation axis, and a cowl are used.

This technical result carries a full range of essential signs.

The invention is shown in diagrams.

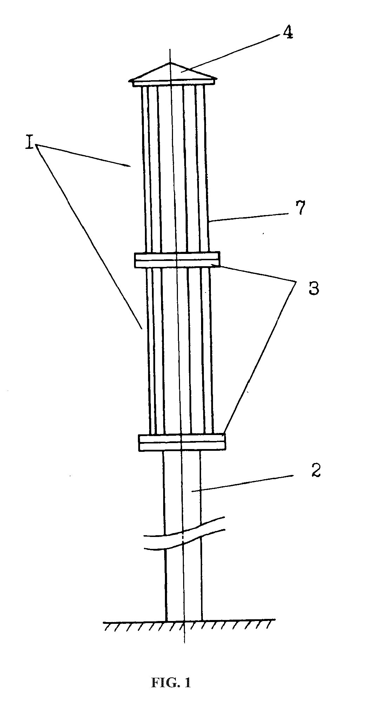

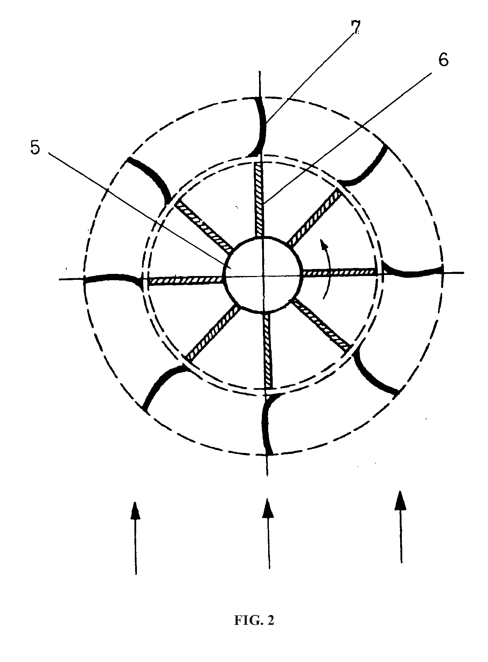

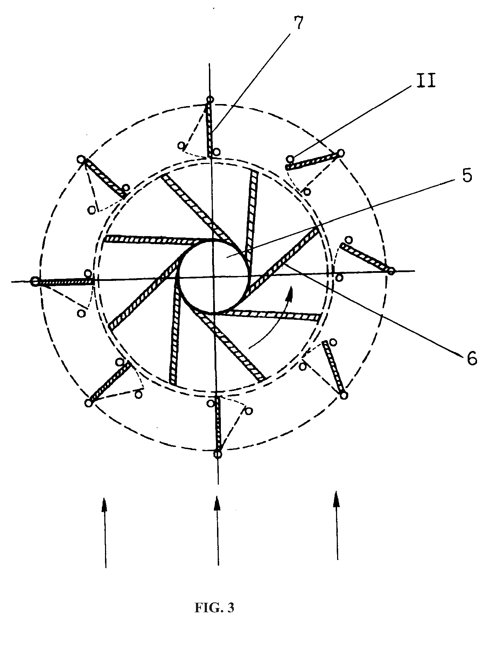

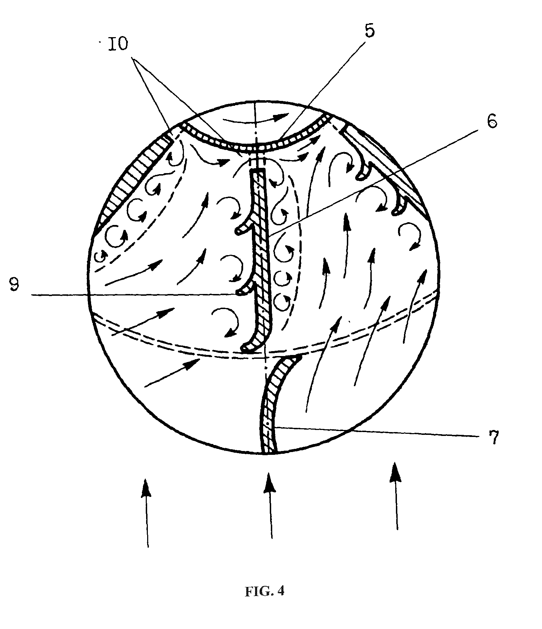

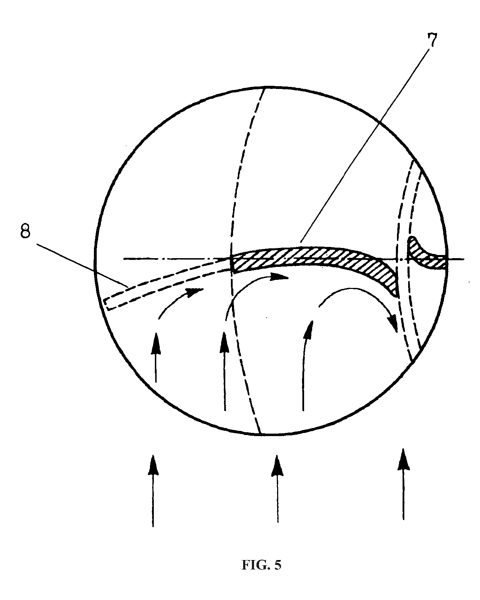

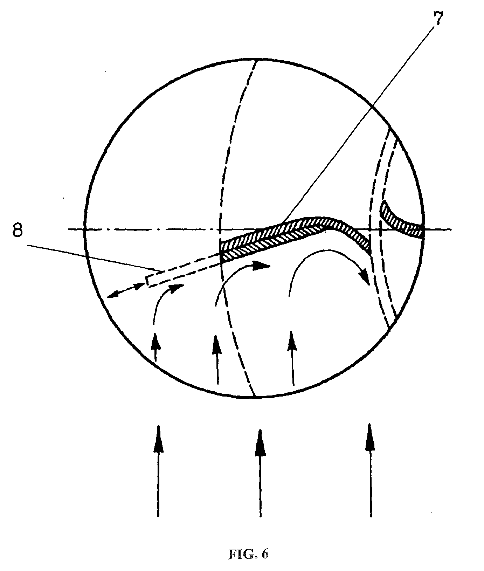

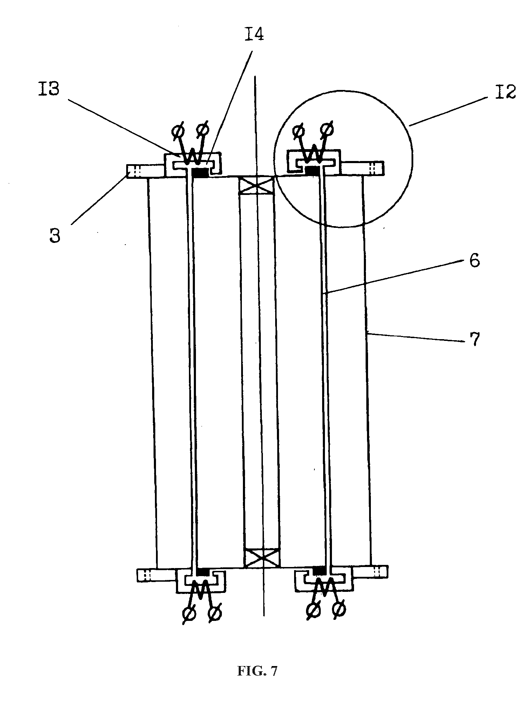

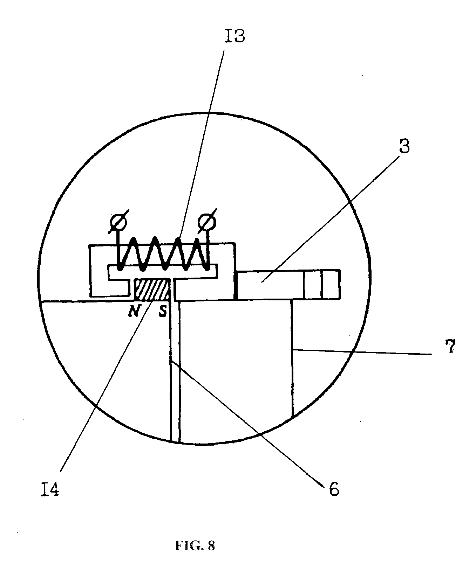

Figure 1 shows the outer appearance of the two-module version of wind energy installation. Figure 2 indicates the wind energy installation with curved vertical guide plates in section; Figure 3 shows it with flat plates. Figure 4 illustrates the placing of vortex wind generators on the rotor blades. Figure 5 illustrates the design of vertical guide plates with a movable sector positioned within them, and Figure 6 shows the design of vertical guide plates with a movable sector positioned on the outside in proximity to them. Figure 7 shows the structural diagram of the wind energy installation with magnetoelectric generators with distributed stator windings. Figure 8 shows a part of a magneto-electric generator.

For increased visibility, the ratio of sizes between separate units and elements has been changed in the diagrams.

The wind energy installation contains an energy module 1, comprising a rotor with vertical axis of rotation, designed with the possibility of vertical installation of at least one additional energy module (Figure 1). Modules in assembly may be produced predominantly with a common axis of rotation, but also with separate axes of rotation. The lower of the energy modules 1 is usually positioned on the stem 2. Subsequent modules are installed one on top of the other using, for example, toroidal fastening collars 3. The upper energy module 1 is predominantly equipped with a cowl (roof) 4 in its upper part. The energy module 1 contains, fixed to the bearing cylinder 5 (Figure 2), rotor blades 6, positioned coaxially within the stator forming the system of vertically positioned wind guide plates 7. The vertical wind guide plates 7 are fixed between horizontally positioned, for example, toroidal fastening collars 3. The wind guide plates 7 are designed to allow changes in the area of each of them through telescopic movement of their movable sector 8 (Figures 5, 6). The (outward) movement of the movable sector 8 may, for example, be achieved through an electromagnetic worm gear, for example through the use of guide runners (not shown on diagrams). The rotor blades 6 are flat and are equipped with vortex generators 9 in the form of curved strips (Figure 4). The rotor blades 6 are positioned in relation to the bearing cylinder 5 by formation of a slotted diffuser 10 along their base between them and the bearing cylinder 5 (Figure 4). The energy module 1 may be made in two versions. In the first, the vertical wind guide plates 7 form arcs in the cross-section, with the rotor blades 6 being positioned radially to the rotor rotation axis (Figure 2). In the second, each wind guide plate 7 is flat with possible rotation around a vertical axis passing through the outer edge of the stator parallel to the rotor rotation axis, and is equipped with two limiters (stoppers) 11, positioned on the inner edge of the stator (Figure 3), with the rotor blades 6 being positioned at a tangent to the bearing cylinder 5. On each end of the energy modules 1 a magnetoelectric generator 12 may be installed with distributed stator windings (Figure 7). Each of these is a series of electromagnetic coils 13, which, together with the open contour of the magnetic circuit, are attached to the fastening collars 3, with continuous magnet-inductors 14 being installed on the upper and lower ends of the energy module 1 rotor (Figure 8). The energy modules 1 of the wind energy installation may have a common axis of rotation or separate axes of rotation in the assembly. The wind energy installation may be equipped with a wind speed control unit, in the form of a tachogenerator connected to a rotor rotation speed regulator, and a brake unit (mechanical or electromechanical) installed on the axis of rotation of the rotor (not shown on diagrams).

The wind energy installation works in the following way. The wind flow reaches the wind guide plates 7, speeds up on them and flows over the rotor blades 6, allowing the energy module 1 to perform useful work through rotor rotation. The wind guide plates 7 change the speed vector of the air flow, optimising its angle of supply to the rotor blades 6. Using wind guide plates with different areas helps to reduce the accelerated speed of the air flow and to further optimise the rotor rotation speed. If the speed of the wind air flow falls, the movable sector 8 emerges, increasing the effective area of the wind guide plates 7 and thus providing a more significant air flow mass (increased "stacking area"), and the rotor rotation speed increases. This allows the installation to work effectively with air flow speeds as low as 3 m/s. After being changed by the wind guide plates 7, the direction of air flow then exerts direct pressure on the rotor blades 6, between which a zone of higher pressure is created. In this zone, the air flow can be "torn", reducing the effective area of work of the rotor blades 6. To avoid this, a slotted diffuser 10 is created along the base of the rotor blades 6, allowing continuous removal of pressurised air from the inter-blade space. The excess air flow moves away from the area of increased pressure through the slotted diffuser 10 and into the area behind the blade, where pressure is lower, forming a vortex area. This leads to higher efficiency of energy yield from the incoming air flow and correspondingly higher efficiency levels of the wind energy installation. The size of the slotted diffuser 10 for specific installation constructions is obtained by experimental means such as a test stand. For additional energy yield from mechanical air flow, including the part that slides from the wind turbine rotor blades 6 after their rotation at a certain angle, vortex generators 9 are used. The air flow moving over the flat rotor blades 6 is subjected to turbulence on the curved strips of the vortex generators 9, slowing down the flow and therefore producing additional energy from the air flow and additional transfer to its rotor, which also increases the overall efficiency levels of the wind energy installation. The air flow movement diagrams are indicated by arrows on Figures 4, 5 and 6. If the wind energy installation is used to produce electrical energy, it is equipped with magnetoelectric generators 12 with distributed stator windings, which, due to their simplicity of construction are the most suited for realising the modular principle of construction of wind energy installations. Here, each of its modules independently produces electrical energy, which altogether increases the electrical energy generation power of one wind energy installation.

Producing a wind energy installation according to the invention increases its operational efficiency. Compared with prior similar installations, the efficiency levels are increased by 10-15% and work is possible at air flow speed from 3 m/s. The function of the wind energy installation does not depend on wind direction; it is gust-resistant and requires a minimal area for installation. The modular principle realised within it simplifies construction and slightly increases its summary output.

## Claims

1. Wind energy installation comprising a main energy module, including a rotor with vertical axis of rotation, formed by a bearing cylinder with blades attached thereto and producing a clearance area and positioned coaxially within a stator formed by a system of vertically positioned wind guide plates, and designed with the possibility of vertical installation of at least one additional energy module, above the main module, different in that it is equipped with a rotor rotation speed regulator, with the stator being equipped with fastening collars for the wind guide plates, each of these being equipped with a movable sector installed with the possibility of telescopic change of its area and connected to the rotor rotation speed regulator, with the rotor blades being flat and equipped with vortex generators in the form of curved strips, and the clearance between the rotor blades and the bearing cylinder taking the form of a slotted diffuser.

2. Wind energy installation as per claim 1, **characterised in that** the movable sector of the wind guide plates is positioned within them.

3. Wind energy installation as per claim 1, **characterised in that** the movable sector of the wind guide plates is positioned on the outside in close proximity to them.

4. Wind energy installation as per claim 1, **characterised in that** the wind guide plates form arcs in the cross-section, with the rotor blades being positioned radially to the rotor rotation axis.

5. Wind energy installation as per claim 1, **characterised in that** each wind guide plate is flat with a possibility of rotation around a vertical axis, passing through the outer edge of the stator and parallel to the rotor rotation axis, and is equipped with two limiters positioned on the inner edge of the stator, with the rotor blades being positioned at a tangent to the bearing cylinder.

6. Wind energy installation as per claim 1, **characterised in that** the main energy module in the lower part is equipped with a main electrical energy unit connected to the bearing cylinder.

7. Wind energy installation as per claim 6, **characterised in that** it is equipped with at least one additional electrical energy unit connected to the bearing cylinder, with one of the additional electrical energy units being installed in the upper part of the main energy module and the others installed in the lower and upper parts of each additional energy module, and a magnetoelectric generator with distributed stator windings is used as the electrical energy unit.

8. Wind energy installation as per claim 7, **characterised in that** the magnetoelectric generator takes the form of a series of electromagnetic coils attached together with an open-contour magnetic circuit to the fastening collars of the wind guide plates, and of continuous magnets-inductors attached to the rotor ends.

9. Wind energy installation as per claim 1, **characterised in that** the energy modules have a common axis of rotation.

10. Wind energy installation as per claim 1, **characterised in that** the energy modules have separate axes of rotation.

11. Wind energy installation as per claim 1, **characterised in that** it is equipped with a wind speed control unit, in the form of a tachogenerator connected to the rotor rotation speed regulator.

12. Wind energy installation as per claim 1, **characterised in that** it is equipped with a protective braking unit installed on the rotor rotation axis.

13. Wind energy installation as per claim 1, **characterised in that** it is equipped with a cowl.
